# EUROPÄISCHE PATENTSCHRIFT

(11) **EP 0 572 007 B1**
(45) Veröffentlichungstag und Bekanntmachung des Hinweises auf die Patenterteilung: **11.12.1996**
(21) Anmeldenummer: 93108589.8
(22) Anmeldetag: 27.05.1993
(51) Int. Cl.: C08G 77/62

(54) **Verfahren zur Herstellung von Polysilazanen**
Process for the production of polysilazanes
Procédé de préparation de polysilazanes

(30) Priorität: 27.05.1992 DE 4217579
(43) Veröffentlichungstag der Anmeldung: 01.12.1993
(73) Patentinhaber: WACKER-CHEMIE GMBH, D-81737 München (DE)
(72) Erfinder: Geisberger, Gilbert, Dr., W-8262 Altötting (DE)

(56) Entgegenhaltungen:
- EP-A- 0 075 826
- EP-A- 0 235 486
- DE-A- 3 639 511
- US-A- 4 340 619
- CHEMICAL ABSTRACTS, vol. 114, no. 23 Columbus, Ohio, US; abstract no 229018g, TALANOV, V. N. ET AL. 'Coammonolysis of 1,2-dichloro-1,1,2,2- tetramethyldisilane with dichlorodiorganosilanes and 1,1,2-trichloro-1,2,2- trimethyldisilane and 1,1,2,2-tetrachloro-1,2-dimethyldisilane with trichloroorganosilanes'
- CHEMICAL ABSTRACTS, vol. 102, no. 26 Columbus, Ohio, US; abstract no. 224838s, BANEY, RONALD H. ET AL. 'The conversion of methylchloropolysilanes and polydisilylazanes to silicon carbide and silicon carbide/silicon nitride ceramics, respectively'

## Beschreibung

Die Erfindung betrifft ein verfahren zur Herstellung von Polysilazanen.

Polysilazane sind allgemein bekannt und finden insbesondere als Vorstufen für Siliciumcarbonitrid- bzw. Siliciumnitridformkörper Verwendung. So beschreibt beispielsweise die EP-A-235 486 ein Verfahren zur Herstellung von Polysilazanen derart, daß das aus R₃SiCl, R₂SiCl₂ oder R₄Si₂Cl₂ und Amin erhaltene Aminolysat mit Organotrichlorsilanen und anschließend nochmals mit Amin umgesetzt wird. Nachteiligerweise entstehen bei diesem Verfahren Polysilazane mit geringerer thermischer Stabilität, d.h. es entstehen bei der Herstellung oder bei der Lagerung durch Nachvernetzung hochvernetzte Polymere, die unlöslich und unschmelzbar und daher ungeeignet für einen Formgebungsprozeß, wie z.B. das Faserspinnen, werden können.

Gegenstand der Erfindung ist ein Verfahren zur Herstellung von Polysilazanen, dadurch gekennzeichnet, daß
a) Disilan der allgemeinen Formel

   Me₆₋ₙSi₂Clₙ

   wobei n 3 oder 4 bedeutet,
   mit Amin der allgemeinen Formel

   RNH₂,

   wobei R Alkyl oder Aryl bedeutet,
   in inerter Atmosphäre bei Temperaturen im Bereich von -80°C bis 100°C umgesetzt wird,
b) das Reaktionsprodukt gemäß a) mit Dichlorsilan der allgemeinen Formel

   R'₂SiCl₂,

   wobei R' jeweils unabhängig voneinander Wasserstoff,
   Alkyl, Allyl oder Aryl bedeutet,
   oder Tetramethyldichlordisilan in inerter Atmosphäre bei Temperaturen im Bereich von -20°C bis 150°C umgesetzt wird und
c) das Reaktionsprodukt gemäß b) in inerter Atmosphäre mit Ammoniak zur Reaktion gebracht wird, wobei solange gasförmiger Ammoniak (maximal bis zur vierfachen äquimolaren Menge an eingesetztem Dichlorsilan) eingeleitet wird, bis von der Reaktionslösung kein Ammoniak mehr absorbiert wird und anschließend das gebildete Ammoniumchlorid abgetrennt wird.

Erfindungsgemäß verwendete Disilane der allgemeinen Formel

Me₆₋ₙSi₂Clₙ

wobei n 3 oder 4 bedeutet,
sind 1,1- und 1,2-Dimethyltetrachlordisilan, 1,1,1- und 1,1,2-Trimetyhltrichlordisilan oder deren Mischungen.

Bei einer bevorzugten Ausführungsform des erfindungsgemäßen Verfahrens wird die hochsiedende Fraktion aus dem Destillationsrückstand der Rochow-Synthese von Dimethyldichlorsilan der ungefähren Zusammensetzung Me_{2,6}Si₂Cl_{3,4} eingesetzt, (W. Noll, Chemistry and Technology of Silicones, Academic Press Inc., Orlando 1968, Seiten 26/27), der aus den Hauptbestandteilen 1,1,2-Trimethyl-1,2,2-trichlordisilan und 1,2-Dimethyl-1,1,2,2-tetrachlordisilan besteht.

Amine der allgemeinen Formel

RNH₂,

wobei R Alkyl- oder Aryl, vorzugsweise Methyl, Ethyl, n-Propyl, iso-Propyl, n-Butyl, sek.-Butyl, n-Hexyl, Cyclohexyl, n-Hexadecyl, Phenyl oder Tolyl bedeutet,
werden einzeln oder als Mischung verwendet.

Insbesondere wird Methylamin oder ein Gemisch von Methylamin mit einem weiteren Amin der oben genannten allgemeinen Formel eingesetzt. Falls Gemische verwendet werden, ist das Molverhältnis Methylamin zu weiterem Amin vorzugsweise im Bereich von 9:1 bis 9,9:0,1.

Bei einer weiteren Ausführungsform des erfindungsgemäßen Verfahrens wird das Disilan gemäß a) im Gemisch mit Trichlorsilan der allgemeinen Formel

R''SiCl₃,

wobei R'' Wasserstoff, Alkyl, Allyl, oder Aryl bedeutet, eingesetzt.
Bevorzugte Molverhältnisse Disilan gemäß a) zu Trichlorsilan sind im Bereich von 10 bis 0,5, insbesondere 3 bis 1.

Beispiele für Trichlorsilane der allgemeinen Formel

R''SiCl₃,

sind Trichlorsilan, Methyltrichlorsilan, Ethyltrichlorsilan, Vinyltrichlorsilan, Propyltrichlorsilan und Phenyltrichlorsilan sowie deren Mischungen.

Inerte Atmosphäre im Sinne der Erfindung bedeutet im wesentlichen sauerstoff- und wasserfreie Atmosphäre. Beispiele verwendeter Atmosphären sind Stickstoff und Argon.

Die Umsetzung der Disilane gemäß a) ggf. im Gemisch mit Trichlorsilan der allgemeinen Formel R''SiCl₃ und dem Amin RNH₂ erfolgt in inerter Atmosphäre bei -80°C bis 100°C, vorzugsweise 20°C bis 60°C. Vorzugsweise werden die Chlorsilane in einem trockenen, das heißt weitgehend wasserfreien Lösungsmittel, welches nicht mit Chlorsilanen reagiert, wie beispielsweise Aromaten, z.B. Toluol, Kohlenwasserstoffen, z.B. Petrolether, Hexan, Ethern, z.B. Diethylether, Methyltert.-Butylether oder chlorierten Kohlenwasserstoffen, gelöst und das Amin gasförmig oder in flüssigem Zustand zugegeben. Vorzugsweise wird die Umsetzung beim Druck der umgebenden Atmosphäre, das heißt 1080 hPa oder ungefähr 1080 hPa, durchgeführt.

Bei der Umsetzung von Chlorsilanen mit Amin entsteht Chlorwasserstoff, der durch andere stickstoffhaltige Verbindungen, vorzugsweise durch tertiäre Amine wie Triethylamin, Pyridin oder Harnstoff, abgefangen werden kann. In diesem Fall wird das erfindungsgemäß verwendete Amin gemäß a) vorzugsweise in äquimolaren Mengen, bezogen auf den Chlorgehalt der im Reaktionsgemisch befindlichen Chlorsilane, eingesetzt.

Im einfachsten Fall ist jedoch das erfindungsgemäß eingesetzte Amin auch HCl-Fänger. Hierbei werden die Amine vorzugsweise in solchen Mengen zugegeben, daß die Anzahl der Stickstoffatome doppelt so groß ist, wie die Anzahl der Chloratome der eingesetzten Chlorsilanverbindungen.

Das Reaktionsprodukt gemäß a) - gegebenenfalls durch Filtration oder Zentrifugation von gebildetem Aminohydrochlorid befreit - wird gemäß b) mit Dichlorsilanen der allgemeinen Formel

R'₂SiCl₂,

wobei R' jeweils unabhängig voneinander Wasserstoff, Alkyl, Allyl oder Aryl bedeutet,
oder Tetramethyldichlordisilan, d.h. 1,1,2,2- und/oder 1,1,1,2-Tetramethyldichlordisilan in inerter Atmosphäre beim Druck der umgebenden Atmosphäre und bei Temperaturen im Bereich von -20°C bis 150°C, zur Vernetzung der oligomeren Aminodisilane bzw. Aminodisilan/Aminosilan-Gemische umgesetzt.

Beispiele für Dichlorsilane der allgemeinen Formel

R'₂SiCl₂,

sind Dichlorsilan, Methyldichlorsilan, Dimethyldichlorsilan, Vinylmethyldichlorsilan, Ethylmethyldichlorsilan, n-Octylmethyldichlorsilan und n-Octadecylmethyldichlorsilan sowie deren Mischungen.
Bevorzugte Molverhältnisse eingesetzte Menge an Disilan und ggf. Trichlorsilan gemäß a) zu Dichlorsilan sind im Bereich von 10 bis 0,5, insbesondere 7 bis 2.

Die Temperatur beträgt hierbei in Abhängigkeit von der Silanzusammensetzung und des gewünschten Vernetzungsgrades vorzugsweise 0 bis 100°C.

Anschließend wird bei Temperaturen von vorzugsweise 0°C bis 60°C solange gasförmiger Ammoniak (maximal bis zur vierfachen äquimolaren Menge an eingesetztem Dichlorsilan) eingeleitet, bis von der Reaktionslösung kein Ammoniak mehr absorbiert wird. Das entstehende Ammoniumhydrochlorid wird beispielsweise durch Filtration oder Zentrifugation abgetrennt und das Filtrat gegebenenfalls durch Destillation vom Lösungsmittel befreit.

Falls das als Rückstand verbleibende Polysilazan bei Temperaturen im Bereich von 15 bis 25°C flüssig ist, kann es thermisch bei Temperaturen von 100 bis 400°C, vorzugsweise 150 bis 250°C, nach dem Abdestillieren niedrigsiedender Oligomere im Vakuum (Druck von 10⁵ bis 1 Pa) in höherkondensierte Polysilazane mit Schmelzpunkten zwischen 50 und 200°C, vorzugsweise 100 bis 150°C, überführt werden.

Die gemäß dem erfindungsgemäßen Verfahren hergestellten Polysilazane weisen vorzugsweise folgende Kenngrößen auf:
- Molgewicht:: 1000 - 10000 g/mol,
bevorzugt 2000 - 5000 g/mol.
- Keramische Ausbeute:: 40 - 80 Gew.-%,
bevorzugt 60 - 75 Gew.-%.
- Schmelzpunkt:: < 200°C, bevorzugt 100 - 150°C.

Polysilazane finden in einer Vielzahl von Anwendungen Verwendung. Ein Überblick ist in M. Peuckert, T. Vaahs, M. Brück, Adv. Mater. 2 (1990) 398, gegeben.

Besondere Vorteile bieten die erfindungsgemäß hergestellten Polysilazane im Anwendungsgebiet der Fasern, Coatings und Matrices auf Basis von Siliciumcarbid/nitrid.

Die Herstellung von Fasern auf Siliciumcarbid/nitrid-Basis ist beispielsweise in J. Lipowitz, Ceramic Bulletin; Vol. 70 (1991) 1888, oder B.G. Penn, F.E. Ledbetter III, J.M. Clemons und J.G. Daniels, J. of Applied Polymer Science; Vol. 27 (1982) 3751, beschrieben, worauf in diesem Zusammenhang ausdrücklich verwiesen wird.

Bei diesen Verfahren wird zumeist das Polysilazan-Harz aus der Schmelze zu Polysilazan-Fasern versponnen. Diese lassen sich durch einen Vernetzungsschritt unschmelzbar machen und können unter Inertgasatmosphäre wie Stickstoff oder Edelgasen oder im Vakuum pyrolysiert werden, wobei man hochfeste anorganische Fasern auf der Basis von SiC/Si₃N₄ erhält. Die Vernetzung kann durch partielles Abhydrolysieren der Aminogruppen an Luft durch die Luftfeuchtigkeit oder mittels Wasserdampf, durch partiellen oder vollständigen Ersatz der Alkylaminogruppen durch Ammoniak, Hydrazin oder Ethylendiamin, durch katalytische Vernetzung mittels Acetylen oder mittels Alkandienen oder Alkandiynen und sonstigen Divinyl- bzw. Polyvinyl oder Diallyl- bzw. Polyallylverbindungen, oder durch partielle Aminentfernung durch Erhitzen im Vakuum erfolgen. Abgesehen von der ersten Vernetzungsmethode wird mit den drei letzteren Methoden kein Sauerstoff in das Polymer und somit SiO₂ in die Faser eingeführt. Die Vernetzung mittels Ammoniak bietet den Vorteil, daß der C-Gehalt im Polymer und damit in der keramischen Faser reduziert wird. Gleichzeitig läßt sich dadurch die keramische Ausbeute bei der Pyrolyse der Fasern steigern. Anstelle in Inertgasatmosphäre kann die Pyrolyse auch in Gegenwart von reaktiven Gasen wie Ammoniak oder Wasserstoff durchgeführt werden. Im ersteren Fall entstehen somit farblose Si₃N₄-Fasern, im zweiten Fall lassen sich durch die Eliminierung von C-Anteilen im Polymer ebenfalls Si₃N₄-Fasern erhalten, welche, je nach Pyrolysedauer und -zeit sowie nach Wasserstoffkonzentration, unterschiedliche Farbnuancen von schwarz über goldgelb bis weiß annehmen.

Die Fasern lassen sich für die Verstärkung von Glas, Glaskeramik, Keramik, Metallen und Kunststoffen in Form von Kurzfasern oder Langfasern einsetzen.

Die Herstellung von Coatings und Matrices auf Siliciumcarbid/nitrid-Basis ist beispielsweise in K.E. Gonsalves, R. Yazici und S. Han; J. Mater. Sci. Lett. 10 (1991) 834, und S.T. Schwab, R.C. Graef, D.L. Davidson und Y. Pan; Polym. Prepr. 32 (1991) 556, beschrieben, worauf in diesem Zusammenhang ausdrücklich verwiesen wird.

Die Polysilazan-Harze eignen sich hierbei besonders für Beschichtungen von unterschiedlichen Substraten, beispielsweise als Einbrennlack für Metalle sowie für keramische Stoffe. In gewissem Umfang ist ein Oxidationsschutz von leicht oxidierenden Werkstoffen, wie Graphit, Glaskohlenstoff, CFC oder Bor, möglich.

Durch Schmelzimprägnierung oder Lösungsimprägnierung lassen sich auch poröse Werkstoffe aus Keramik oder Metallen abdichten. Weiterhin kann man das Polysilazan als Bindemittel bei der Herstellung poröser oder dichter keramischer Werkstoffe einsetzen, beispielsweise beim Sintern von Oxidpulvern bzw. von Carbiden, Nitriden, Boriden, Siliziden oder Sialonen.

Durch Pyrolyse der Polysilazane erhält man je nach Pyrolysebedingungen SiC/Si₃N₄-Pulver bzw. Si₃N₄-Pulver, welche sich in Gegenwart von Sinterhilfsmitteln zu kompakten Körpern sintern lassen.

Da bei der Pyrolyse der Polysilazane Gase entweichen, läßt sich auch eine Schaumkeramik herstellen, welche vorwiegend als Wärmedämmstoff oder als Filter für geschmolzene Metalle eingesetzt werden kann.

Zudem lassen sich keramische Fasern, beispielsweise Al₂O₃- oder SiC-Fasern bzw. -Whisker mit den Polysilazanen imprägnieren, so daß bei der Pyrolyse eine faserverstärkte Keramik resultiert.

### Beispiel 1

In einem 4-Liter Dreihalskolben mit Rückflußkühler und Gaseinleitungsrohr wurden 300 g eines MethylchlordisilanGemisches, bestehend aus 1,1,2-Trimethyl-1,2,2-trichlordisilan und 1,2-Dimethyl-1,1,2,2-tetrachlordisilan der ungefähren Zusammensetzung Me_{2,6}Si₂Cl_{3,4}, erhalten aus der hochsiedenden Fraktion der Rochow-Synthese von Dimethyldichlorsilan, in 2000 ml Toluol unter Inertgas gelöst.
Nachfolgend wurde so lange gasförmiges Methylamin eingeleitet, wobei die Temperatur der Reaktionslösung bis auf 50°C stieg, bis kein Gas mehr abreagierte. Nach dem Abkühlen wurde das Methylaminhydrochlorid abfiltriert und mit 100 ml Toluol ausgewaschen.

Zu dem erhaltenen Aminolysat wurden 42 g Methyldichlorsilan gegeben und die Reaktionslösung 2 Stunden bei 40°C gehalten. Anschließend wurde so lange Ammoniak eingeleitet, bis kein Gas mehr absorbiert wurde. Das entstandene Ammoniumchlorid wurde abfiltriert und vom Filtrat das Lösungsmittel entfernt. Als Rückstand erhielt man eine ölige Substanz, die nach 4-stündigem Erhitzen auf 250°C und Abziehen niedrigsiedender Produktanteile im Vakuum 262 g (58 Gew.-%, bezogen auf eingesetztes Si) eines bei 95°C schmelzenden Polysilazans ergab. Laut Gelchromatogramm lag eine monomodale Molekulargewichtsverteilung mit einem Maximum bei 1500 g/mol vor. (Elementaranalyse: C 33,4 Gew.-%, H 8,4 Gew.-%, N 15,9 Gew.-%, Si 40,2 Gew.-%; ¹H-NMR NMe/SiMe/SiH:30/100/5).

### Beispiel 2

Entsprechend Beispiel 1 wurde eine Mischung von 300 g Methylchlordisilanen der Zusammensetzung Me_{2,6}Si₂Cl_{3,4} und 100 g Trichlorsilan in 3 l Toluol gelöst und mit Methylamin umgesetzt, bis kein Gas mehr von der Lösung aufgenommen wurde. Die Reaktionsmischung wurde mit 50 g Dimethyldichlorsilan versetzt und 2 h auf 60°C erhitzt, anschließend Ammoniak eingeleitet, bis kein Gas mehr von der Lösung absorbiert wurde. Das entstandene Ammoniumhydrochlorid wurde abgetrennt und das Filtrat im Vakuum vom Lösungsmittel befreit. Als Rückstand erhielt man 260 g eines gelblichen, öligen Aminodisilan-Gemisches (Elementaranalyse: Si 37,0 Gew.-%, C 32,4 Gew.-%, H 8,3 Gew.-%, N 20,3 Gew.-%; Gelchromatogramm: 1000 - 5000 g/mol; keramische Ausbeute: 60 Gew.-%, bezogen auf eingesetztes Aminodisilan). Dieses Aminodisilan-Gemisch ergab nach 5-stündigem Erhitzen auf 250°C und Abdestillieren von wenig niedrigsiedenden, oligomeren Aminodisilanen bei einem Druck von 2 · 10³ Pa 188 g (Ausbeute 72 Gew.-%, bezogen auf eingesetztes Si) eines bei 105°C schmelzenden Polysilazans (Elementaranalyse: Si 41,6 Gew.-%, C 27,3 Gew.-%, H 7,9 Gew.-%, N 20,3 Gew.-%; Gelchromatogramm: Maximum bei 5000 g/mol mit Schulter bei 1000 g/mol; ¹H-NMR NMe/SiMe/SiH : 83/100/19; keramische Ausbeute: 68 Gew.-%, bezogen auf eingesetztes Polysilazan).

Von diesem Polymeren konnten aus der Schmelze bei 110°C Fasern mit 20 µm Durchmesser ersponnen werden. Nach eintägiger Lagerung an Luft wurden die Fasern sowohl diskontinuierlich (in einem Aluminiumoxidschiffchen) als auch kontinuierlich in einem Rohrofen unter Argon bis 1250°C pyrolysiert, wobei Siliziumcarbonitrid-Fasern mit hoher Festigkeit erhalten wurden (Faserdurchmesser: 13-16 µm; Analyse: Si 50,8 Gew.-%, C 17,0 Gew.-%, N 19,8 Gew.-%, 0 12,0 Gew.-%; Zugfestigkeit 2000 - 2500 MPa; E-Modul: 200 GPa; spez. Widerstand 10⁶ Ohm . cm; kein Gewichtsverlust unter Argon bis 1450°C; 1% Gewichtsverlust bei 1500°C in 10 h; Faser blieb bis 1400°C amorph, bei höheren Temperaturen setzte Kristallisation von β-SiC ein).

### Beispiel 3

Entsprechend Beispiel 1 wurde eine Mischung von 200 g Methylchlordisilanen der Zusammensetzung Me_{2,6}Si₂Cl_{3,4} und 133 g Trichlorsilan in 1,5 l Toluol gelöst, 10 g n-Hexadecylamin zugegeben und mit Methylamin umgesetzt, bis kein Gas mehr von der Lösung aufgenommen wurde. Nach Entfernen des Niederschlags wurde das Filtrat 2 h mit 40 g Dimethyldichlorsilan auf 60°C erhitzt, anschließend Ammoniak eingeleitet, bis kein Gas mehr von der Lösung absorbiert wurde. Das entstandene Ammoniumhydrochlorid wurde abgetrennt und das Filtrat im Vakuum vom Lösungsmittel befreit. Als Rückstand erhielt man 196 g eines gelblichen, öligen Aminodisilan-Gemisches. Nach 3-stündigem Erhitzen auf 200°C und Abdestillieren von wenig niedrigsiedenden, oligomeren Aminodisilanen im Vakuum erhielt man 166 g (Ausbeute 69 Gew.-%, bezogen auf eingesetztes Si) eines bei 105°C schmelzenden Polysilazans (Elementaranalyse: Si 36,7 Gew.-%, C 30,1 Gew.-%, H 8,5 Gew.-%, 2000 g/mol; ¹H-NMR - Intensitäten NMe/SiMe/SiH : 100/99/27; keramisch Ausbeute 50 Gew.-%, bezogen auf eingesetztes Polysilazan).

### Beispiel 4

Entsprechend Beispiel 1 wurde eine Mischung von 300 g Methylchlordisilanen der Zusammensetzung Me_{2,6}Si₂Cl_{3,4} und 100 g Vinyltrichlorsilan in 1,5 l Toluol aufgenommen und mit Methylamin umgesetzt, bis kein Gas mehr von der Lösung aufgenommen wurde. Zu der Reaktionsmischung wurden 50 g Methyldichlorsilan getropft und 2 h bei 40°C gerührt. Anschließend wurde bis zur vollständigen Sättigung Ammoniak durch die Lösung geleitet. Das entstandene Ammoniumhydrochlorid wurde abgetrennt und Filtrat bis zu einer Temperatur von 120°C und einem Druck von 10⁵ bis 10³ Pa vom Lösungsmittel und niedrigsiedenden Aminosilanen befreit. Als Rückstand verblieben 210 g (Ausbeute 67 Gew.-%, bezogen auf eingesetztes Si) eines bei 70-80°C schmelzenden gelblichen Polysilazans (Elementaranalyse: Si 33,6 %, C 35,1%, N 18,5%, H 8,6 %; Gelchromatogramm: breite MG-Verteilung von 1000 bis 6000 g/mol; keramische Ausbeute: 47 Gew.-%, bezogen auf eingesetztes Polysilazan).

## Patentansprüche

1. Verfahren zur Herstellung von Polysilazanen, dadurch gekennzeichnet, daß
a) Disilan der allgemeinen Formel
Me₆₋ₙSi₂Clₙ,
wobei n 3 oder 4 bedeutet,
mit Amin der allgemeinen Formel
RNH₂,
wobei R Alkyl oder Aryl bedeutet,
in inerter Atmosphäre bei Temperaturen im Bereich von -80°C bis 100°C umgesetzt wird,
b) das Reaktionsprodukt gemäß a) mit Dichlorsilan der allgemeinen Formel
R'₂SiCl₂,
wobei R' jeweils unabhängig voneinander Wasserstoff, Alkyl, Allyl oder Aryl bedeutet,
oder Tetramethyldichlordisilan in inerter Atmosphäre bei Temperaturen im Bereich von -20°C bis 150°C umgesetzt wird und
c) das Reaktionsprodukt gemäß b) in inerter Atmosphäre mit Ammoniak zur Reaktion gebracht wird, wobei solange gasförmiger Ammoniak (maximal bis zur vierfachen äquimolaren Menge an eingesetztem Dichlorsilan) eingeleitet wird, bis von der Reaktionslösung kein Ammoniak mehr absorbiert wird und anschließend das gebildete Ammoniumchlorid abgetrennt wird.

2. Verfahren nach Anspruch 1, dadurch gekennzeichnet, daß das Amin der allgemeinen Formel
RNH₂,
wobei R Methyl, Ethyl, n-Propyl, iso-Propyl, n-Butyl, sek.-Butyl, n-Hexyl, Cyclohexyl, n-Hexadecyl, Phenyl oder Tolyl bedeutet,
einzeln oder als Mischung eingesetzt wird.

3. Verfahren nach Anspruch 1 oder 2, dadurch gekennzeichnet, daß Methylamin oder ein Gemisch von Methylamin mit einem weiteren Amin der allgemeinen Formel
RNH₂,
wobei R Methyl, Ethyl, n-Propyl, iso-Propyl, n-Butyl, sek.-Butyl, n-Hexyl, Cyclohexyl, n-Hexadecyl, Phenyl oder Tolyl bedeutet,
eingesetzt wird.

4. Verfahren nach einem oder mehreren der Ansprüche 1 bis 3, dadurch gekennzeichnet, daß das Disilan gemäß a) im Gemisch mit Trichlorsilan der allgemeinen Formel
R"SiCl₃,
wobei R''Wasserstoff, Alkyl, Allyl oder Aryl bedeutet,
eingesetzt wird.

5. Verfahren nach Anspruch 4, dadurch gekennzeichnet, daß das Molverhältnis Disilan gemäß a) zu Trichlorsilan im Bereich von 10 bis 0,5 liegt.

6. Verfahren nach Anspruch 4 oder 5, dadurch gekennzeichnet, daß das eingesetzte Trichlorsilan der allgemeinen Formel
R"SiCl₃,
Trichlorsilan, Methyltrichlorsilan, Ethyltrichlorsilan, Vinyltrichlorsilan, Propyltrichlorsilan und Phenyltrichlorsilan oder deren Mischungen ist.

7. Verfahren nach einem oder mehreren der Ansprüche 1 bis 6, dadurch gekennzeichnet, daß das eingesetzte Dichlorsilan der allgemeinen Formel
R'₂SiCl₂,
Dichlorsilan, Methyldichlorsilan, Dimethyldichlorsilan, Vinylmethyldichlorsilan, Ethylmethyldichlorsilan, n-Octylmethyldichlorsilan und n-Octadecylmethyldichlorsilan oder deren Mischungen ist.

8. Verfahren nach einem oder mehreren der Ansprüche 1 bis 7, dadurch gekennzeichnet, daß das Molverhältnis der eingesetzten Menge an Disilan und gegebenenfalls Trichlorsilan gemäß a) zu Dichlorsilan im Bereich von 10 bis 0,5 ist.

9. Polysilazane erhältlich nach einem oder mehreren der Ansprüche 1 bis 8.

## Claims

1. Process for the preparation of polysilazanes, characterized in that
a) the disilane of the general formula
Me₆₋ₙSi₂Clₙ
in which n denotes 3 or 4,
is reacted with an amine of the general formula
RNH₂,
in which R denotes alkyl or aryl,
in an inert atmosphere at temperatures in the range from -80°C to 100°C,
b the reaction product from a) is reacted with a dichlorosilane of the general formula
R'₂SiCl₂,
in which the radicals R', independent of one another, each denote hydrogen, alkyl, allyl or aryl,
or tetramethyldichlorodisilane in an inert atmosphere at temperatures in the range from -20°C to 150°C and
c) the reaction product from b) is reacted with ammonia in an inert atmosphere, gaseous ammonia (up to not more than four times the equimolar amount of dichlorosilane used) being passed in until no further ammonia is absorbed by the reaction solution, and subsequently the ammonium chloride formed is separated off.

2. Process according to Claim 1, characterized in that the amine of the general formula
RNH₂,
in which R denotes methyl, ethyl, n-propyl, isopropyl, n-butyl, sec-butyl, n-hexyl, cyclohexyl, n-hexadecyl, phenyl or tolyl,
is used individually or as a mixture.

3. Process according to Claim 1 or 2, characterized in that methylamine or a mixture of methylamine with a further amine of the general formula
RNH₂,
in which R denotes methyl, ethyl, n-propyl, isopropyl, n-butyl, sec-butyl, n-hexyl, cyclohexyl, n-hexadecyl, phenyl or tolyl,
is used.

4. Process according to one or more of Claims 1 to 3, characterized in that the disilane from a) is used as a mixture with trichlorosilane of the general formula
R"SiCl₃,
in which R" denotes hydrogen, alkyl, allyl or aryl.

5. Process according to Claim 4, characterized in that the molar ratio of disilane from a) to trichlorosilane is in the range from 10 to 0.5.

6. Process according to Claim 4 or 5, characterized in that the trichlorosilane used, of the general formula R"SiCl₃, is trichlorosilane, methyltrichlorosilane, ethyltrichlorosilane, vinyltrichlorosilane, propyltrichlorosilane and phenyltrichlorosilane or mixtures thereof.

7. Process according to one or more of Claims 1 to 6, characterized in that the dichlorosilane used, of the general formula
R'₂SiCl₂,
is dichlorosilane, methyldichlorosilane, dimethyldichlorosilane, vinylmethyldichlorosilane, ethylmethyldichlorosilane, n-octylmethyldichlorosilane and n-octadecylmethyldichlorosilane or mixtures thereof.

8. Process according to one or more of Claims 1 to 7, characterized in that the molar ratio of the amount of disilane used and, if required, trichlorosilane from a) to dichlorosilane is in the range from 10 to 0.5.

9. Polysilazane obtainable according to one or more of Claims 1 to 8.

## Revendications

1. Procédé de préparation de polysilazanes, caractérisé en ce que
a) l'on fait réagir un disilane de formule générale
Me₆₋ₙSi₂Clₙ,
dans laquelle n représente 3 ou 4,
avec une amine de formule générale
RNH₂,
dans laquelle R représente un groupe alkyle ou aryle,
dans une atmosphère inerte à des températures dans le domaine de -80°C à 100°C,
b) l'on fait réagir le produit de réaction selon a) avec un dichlorosilane de formule générale
R'₂SiCl₂,
dans laquelle R' représente, chacun indépendamment l'un de l'autre, un hydrogène, un groupe alkyle, allyle ou aryle,
ou du tétraméthyldichlorodisilane dans une atmosphère inerte à des températures dans le domaine de -20°C à 150°C et
c) l'on fait réagir le produit de réaction selon b) dans une atmosphère inerte avec de l'ammoniac, l'ammoniac gazeux (au maximum jusqu'à quatre fois la quantité équimolaire de dichlorosilane utilisé) étant introduit jusqu'à ce que la solution réactionnelle n'absorbe plus d'ammoniac, et l'on sépare ensuite le chlorure d'ammonium formé.

2. Procédé selon la revendication 1, caractérisé en ce que l'on utilise l'amine de formule générale
RNH₂,
dans laquelle R représente un groupe méthyle, éthyle, n-propyle, iso-propyle, n-butyle, sec-butyle, n-hexyle, cyclohexyle, n-hexadécyle, phényle ou tolyle,
séparément ou sous forme de mélange.

3. Procédé selon la revendication 1 ou 2, caractérisé en ce que l'on utilise la méthylamine ou un mélange de la méthylamine avec une autre amine de formule générale
RNH₂,
dans laquelle R représente un groupe méthyle, éthyle, n-propyle, iso-propyle, n-butyle, sec-butyle, n-hexyle, cyclohexyle, n-hexadécyle, phényle ou tolyle.

4. Procédé selon l'une ou plusieurs des revendications 1 à 3, caractérisé en ce que l'on utilise le disilane selon a) en mélange avec un trichlorosilane de formule générale
R"SiCl₃,
dans laquelle R" représente un hydrogène, un groupe alkyle, allyle ou aryle.

5. Procédé selon la revendication 4, caractérisé en ce que le rapport molaire du disilane selon a) au trichlorosilane se situe dans le domaine de 10 à 0,5.

6. Procédé selon la revendication 4 ou 5, caractérisé en ce que le trichlorosilane utilisé de formule générale R"SiCl₃, est le trichlorosilane, le méthyltrichlorosilane, l'éthyltrichlorosilane, le vinyltrichlorosilane, le propyltrichlorosilane et le phényltrichlorosilane ou des mélanges de ceux-ci.

7. Procédé selon l'une ou plusieurs des revendications 1 à 6, caractérisé en ce que le dichlorosilane utilisé de formule générale R'₂SiCl₂, est le dichlorosilane, le méthyldichlorosilane, le diméthyldichlorosilane, le vinylméthyldichlorosilane, l'éthylméthyldichlorosilane, le n-octylméthyldichlorosilane et le n-octadécylméthyldichlorosilane ou des mélanges de ceux-ci.

8. Procédé selon l'une ou plusieurs des revendications 1 à 7, caractérisé en ce que le rapport molaire de la quantité de disilane utilisée, et le cas échéant de trichlorosilane selon a), au dichlorosilane est dans le domaine de 10 à 0,5.

9. Polysilazane pouvant être obtenu selon l'une ou plusieurs des revendications 1 à 8.
